# EUROPÄISCHE PATENTSCHRIFT

(11) **EP 2 896 273 B1**
(45) Veröffentlichungstag und Bekanntmachung des Hinweises auf die Patenterteilung: **29.03.2017**
(21) Anmeldenummer: 13779111.7
(22) Anmeldetag: 10.09.2013
(51) Int. Cl.: H05B 33/08, H05B 37/02

(54) **REGELSCHLEIFE MIT VERÄNDERBARER ZEITKONSTANT EINER LEISTUNGSFAKTORKORREKTUR FÜR LASTKREIS MIT LEUCHTMITTELN**
CONTROL LOOP WITH A VARIABLE TIME CONSTANT OF POWER FACTOR CORRECTION FOR A LOAD CIRCUIT WITH LUMINOUS MEANS
BOUCLE DE RÉGULATION À CONSTANTE DE TEMPS MODIFIABLE D'UNE CORRECTION DU FACTEUR DE PUISSANCE POUR CIRCUIT DE CHARGE POURVU DE MOYENS D'ÉCLAIRAGE

(30) Priorität: 11.09.2012 DE 102012216047
(43) Veröffentlichungstag der Anmeldung: 22.07.2015
(73) Patentinhaber: Tridonic GmbH & Co. KG, 6851 Dornbirn (AT)
(72) Erfinder: VONACH, Christoph, A-6850 Dornbirn (AT); AUER, Hans, A-6850 Dornbirn (AT)
(74) Vertreter: Rupp, Christian
(86) Internationale Anmeldenummer: PCT/AT2013/000146
(87) Internationale Veröffentlichungsnummer: WO 2014/040097

(56) Entgegenhaltungen:
- DE-A1-102008 057 333
- DE-A1-102012 206 349
- US-A1- 2002 135 339
- US-A1- 2010 085 024

## Beschreibung

Die Erfindung bezieht sich allgemein auf Schaltungen zum Betrieb von Leuchtmitteln, wie beispielsweise Gasentladungslampen oder anorganischen oder organischen LEDs d.h. Leuchtdioden.

Stand der Technik kann den folgenden Druckschriften entnommen werden:
- der US-Patentanmeldung US 2002/0135339 A1, welche einen Dual-Loop-Regler offenbart, sowie
- der deutschen Patentanmeldung DE 10 2012 206349 A1, welche ein Verfahren und eine Schaltungsanordnung zum Betrieb von Leuchtmitteln mit Lastsprung offenbart.

Bei vielen Betriebsgeräten für Leuchtmittel ist es üblich, dass die Leuchtmittel entweder hochfrequent - insbesondere bei Gasentladungslampen - oder aber durch Puls-Modulation - beispielsweise insbesondere bei LEDs - betrieben werden. Dazu sind sogenannte Treiberschaltungen vorgesehen, die beispielsweise in Form eines Puls-Modulators, einer Volloder Halbbrückenschaltung, etc. ausgebildet sein können. Diesen Treiberschaltungen wird üblicherweise eine DC-Zwischenkreisspannung zugeführt, der ggf. ein sogenannter Ripple überlagert sein kann.

Zur Bereitstellung dieser DC-Zwischenkreisspannung wird oft eine sogenannte PFC-Schaltung (Power Factor Correction), auch als aktive Leistungsfaktorkorrekturschaltung bezeichnet, verwendet. Diese PFC-Schaltung erzeugt die DC-Zwischenkreisspannung ausgehend von einer üblicherweise gleichgerichteten Netzversorgungsspannung bei Einhaltung eines möglichst hohen Leistungsfaktors.

Im Rahmen der vorliegenden Erfindung handelt es sich dabei stets um sogenannte aktiv getaktete PFC-Schaltungen, also Schaltungen, bei denen die Leistungsaufnahme der PFC-Schaltung durch Taktung eines Schaltelements, wie beispielsweise einen Transistors oder MOSFET vorgegeben wird. Bei geschlossenem Schaltelement wird dabei eine Induktivität aufmagnetisiert, die sich dann bei geöffnetem Schalter über eine Diode in einen Speicherkondensator entlädt. Typische Schaltungen sind beispielsweise ein Hochsetzsteller, ein isolierter Sperrwandler oder ein sog. SEPIC Konverter.

Das Schaltelement der PFC-Schaltung und z.B. die Einschaltzeitdauer Ton des Schaltelements wird üblicherweise von einer Steuerschaltung geregelt. Es ist weiterhin bekannt, die Reglereinstellungen z.B. abhängig von extern zugeführten Dimm-Befehlen zu ändern.

Eine gewisse Problematik entsteht dahingehend, dass während einem Übergangszeitraum nach einer Änderung der Reglereinstellungen die von der PFC-Schaltung übertragene Energie zu hoch bzw. niedrig sein kann. Wenn diese Übergangszeit z.B. 40 ms erreicht, ist diese temporäre zu hohe bzw. zu niedrige übertragene Energie von dem menschlichen Auge in Form eines Lichtblitzes bzw. einer niedrigen Licht-Intensität erfassbar.

Es ist Aufgabe der vorliegenden Erfindung, eine aktiv getaktete PFC-Schaltung hinsichtlich ihres Verhaltens bei Änderung der Reglereinstellungen zu verbessern. Insbesondere ist es Aufgabe der Erfindung, solche kurzfristige Lichtblitze bzw. niedrigen Licht-Intensitäten zu verhindern.

Diese Aufgabe wird erfindungsgemäß gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung bezieht sich auf ein Verfahren zum Betrieb einer aktiv getakteten PFC-Schaltung mit direkt oder indirekt angeschlossenem Lastkreis am Ausgang der PFC-Schaltung. Der Lastkreis weist mindestens ein Leuchtmittel, insbesondere eine oder mehrere LEDs auf. Der Lastkreis kann zumindest eine aktive oder passive Treiberschaltung für das Leuchtmittel aufweisen, beispielsweise einen oder mehrere Schaltregler wie eine Halbbrücke oder einen Tiefsetzsteller oder auch einen Linearregler. Die PFC-Schaltung wird von einem PFC-Regler derart angesteuert wird, dass der PFC-Regler auf Basis von mindestens einer ersten und einer zweiten Reglereinstellung einen Steuerparameter, insbesondere eine Einschaltzeitdauer, für die Taktung der PFC-Schaltung ermittelt. Der Zeitpunkt einer Änderung von der ersten auf die zweite Reglereinstellung ist abhängig von dem direkt oder indirekt ermittelten Mittelwert des Steuerparameters, insbesondere der Einschaltzeitdauer.

Ein weiterer Aspekt der Erfindung bezieht sich auf eine integrierte Schaltung, insbesondere ASIC oder Microcontroller oder eine Hybridversion davon, die zur Implementierung eines derartigen Verfahrens bzw. die zur derartigen Änderung der Reglereinstellung eines PFC-Reglers ausgebildet ist.

Ein weiterer Aspekt der Erfindung bezieht sich auf einen PFC-Regler zum Betrieb einer aktiv getakteten PFC-Schaltung mit direkt oder indirekt angeschlossenem Lastkreis am Ausgang der PFC-Schaltung. Der Lastkreis weist mindestens ein Leuchtmittel auf, insbesondere eine oder mehrere LEDs. Der PFC-Regler ist dazu ausgebildet, die PFC-Schaltung derart anzusteuern, dass der PFC-Regler auf Basis von mindestens einer ersten und einer zweiten Reglereinstellung einen Steuerparameter, insbesondere eine Einschaltzeitdauer, für die Taktung der PFC-Schaltung ermittelt. Der Zeitpunkt einer Änderung von der ersten auf die zweite Reglereinstellung ist abhängig von dem direkt oder indirekt ermittelten Mittelwert des Steuerparameters, insbesondere der Einschaltzeitdauer.

Ein weiterer Aspekt der Erfindung bezieht sich auf eine Schaltung aufweisend eine aktiv getaktete PFC-Schaltung und einen PFC-Regler, der dazu ausgebildet ist, die PFC-Schaltung derart anzusteuern, dass der PFC-Regler auf Basis von mindestens einer ersten und einer zweiten Reglereinstellung einen Steuerparameter, insbesondere eine Einschaltzeitdauer, für die Taktung der PFC-Schaltung ermittelt. Der Zeitpunkt einer Änderung von der ersten auf die zweite Reglereinstellung ist abhängig von dem direkt oder indirekt ermittelten Mittelwert des Steuerparameters, insbesondere der Einschaltzeitdauer.

Ein weiterer Aspekt der Erfindung bezieht sich auf ein Beleuchtungsmodul aufweisend eine aktiv getaktete PFC-Schaltung, einen am Ausgang der PFC-Schaltung direkt oder indirekt angeschlossenen Lastkreis, wobei im Lastkreis mindestens ein Leuchtmittel, insbesondere eine oder mehrere LEDs anschließbar ist, und einen PFC-Regler, der dazu ausgebildet ist, die PFC-Schaltung derart anzusteuern, dass der PFC-Regler auf Basis von mindestens einer ersten und einer zweiten Reglereinstellung einen Steuerparameter, insbesondere eine Einschaltzeitdauer, für die Taktung der PFC-Schaltung ermittelt. Der Zeitpunkt einer Änderung von der ersten auf die zweite Reglereinstellung ist abhängig von dem direkt oder indirekt ermittelten Mittelwert des Steuerparameters, insbesondere der Einschaltzeitdauer.

Vorzugsweise wird der Zeitpunkt der Änderung der Reglereinstellung über einen Vergleich der Einschaltzeitdauer mit dem zeitlichen Mittelwert der Einschaltzeitdauer ermittelt.

Vorzugsweise wird die Änderung der Reglereinstellung dann vorgenommen, wenn erfasst wird, dass die für die Taktung der PFC-Schaltung ermittelte Einschaltzeitdauer und der zeitlichen Mittelwert der Einschaltzeitdauer gleich sind.

Vorzugsweise ermittelt der PFC-Regler die Einschaltzeitdauer für die Taktung der PFC-Schaltung, und die Reglereinstellung wird erst geändert, wenn die Einschaltzeitdauer in einem vordefinierten Korridor um den zeitlichen Mittelwert der Einschaltzeitdauer sich befindet.

Vorzugsweise wird zur Bildung des zeitlichen Mittelwerts der Einschaltzeitdauer eine vordefinierte Anzahl an Perioden der von der PFC-Schaltung erzeugten Zwischenkreisspannung berücksichtigt.

Vorzugsweise wird der Zeitpunkt der Änderung der Reglereinstellung über einen Vergleich der von der PFC-Schaltung erzeugten Zwischenkreisspannung mit einer Sollwertvorgabe für die Zwischenkreisspannung ermittelt.

Vorzugsweise wird die Reglereinstellung erst geändert, wenn die von der PFC-Schaltung erzeugte Zwischenkreisspannung die Sollwertvorgabe für die Zwischenkreisspannung kreuzt.

Vorzugsweise wird die Reglereinstellung erst geändert, wenn die von der PFC-Schaltung erzeugte Zwischenkreisspannung in einem vordefinierten Bereich um den Sollwert für die Zwischenkreisspannung liegt.

Vorzugsweise entspricht die Änderung der Reglereinstellung einer Verstellung der Reglergeschwindigkeit, insbesondere der Zeitkonstanten des PFC-Reglers.

Vorzugsweise stellt die erste Reglereinstellung gegenüber der zweiten Reglereinstellung eine schnellere Reglergeschwindigkeit dar.

Vorzugsweise wird die PFC-Schaltung mit einer vorzugsweise gleichgerichteten Wechselspannung versorgt.

Vorzugsweise wird die Änderung der Reglereinstellung von einer Änderung der Last oder von einer Änderung der Betriebsphase des Leuchtmittels verursacht.

Vorzugsweise wird die Änderung der Last ausgehend von Parametern des Lastkreises ermittelt.

Vorzugsweise wird eine Änderung der Last in Form eines Dimmens des Leuchtmittels oder in Form einer Veränderung der Anzahl der Leuchtmittel ermittelt.

Weitere Aspekte, Merkmale und Eigenschaften der vorliegenden Erfindung werden aus der folgenden Beschreibung beispielhafter Ausführungsbeispiele und anhand der Figuren der begleitenden Zeichnungen näher erläutert.
Fig. 1 zeigt einen beispielsweisen Aufbau einer PFC-Schaltung mit einem Lastkreis mit einer Treiberschaltung und LEDs als Leuchtmittel.
Fig. 2 zeigt einen weiteren beispielsweisen Aufbau einer PFC-Schaltung mit einem Lastkreis mit einer Treiberschaltung und LEDs als Leuchtmittel.
Fig. 3 zeigt schematisch ein Betriebsgerät mit adaptiver PFC-Schaltung gemäß der vorliegenden Erfindung.
Fig. 4 zeigt den Verlauf der Zwischenkreisspannung bei einer Veränderung der Regelparameter nach dem Stand der Technik.
Fig. 5 zeigt ebenfalls den Verlauf der Zwischenkreisspannung bei einer Veränderung der Regelparameter nach dem Stand der Technik.
Fig. 6 zeigt den Verlauf der Zwischenkreisspannung bei einer Veränderung der Regelparameter nach der vorliegenden Erfindung.

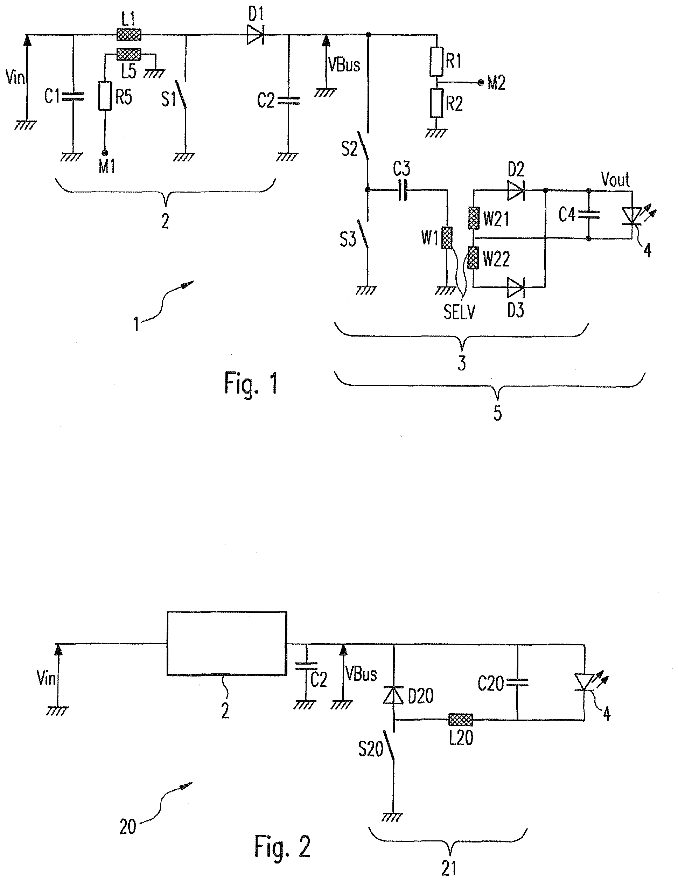

Fig. 1 zeigt ein erstes Ausführungsbeispiel eines Betriebsgeräts 1 gemäß der vorliegenden Erfindung. Das Betriebsgerät 1 umfasst eine adaptive PFC-Schaltung 2 und einen Treiber 3 zum Betreiben einer LED 4. Die LED 4 ist nur ein Beispiel eines Leuchtmittels, das von dem Betriebsgerät 1 versorgt werden kann. Alternativ kann eine OLED, also eine organische LED, oder z.B. eine Leuchtstofflampe bzw. Gasentladungslampe betrieben werden. Die Zahl der betriebenen Leuchtmittel ist auch variabel. Statt nur einem Leuchtmittel können auch mehrere, z.B. in Serie geschaltete Leuchtmittel vorgesehen sein.

Wie aus Fig. 1 ersichtlich, wird die LED 4 bzw. das oder die Leuchtmittel ausgehend von einer Eingangsspannung Vin versorgt, die insbesondere eine sinusförmige Netzwechselspannung sein kann. Die Eingangsspannung Vin ist eine vorzugsweise gleichrichtete Netzwechselspannung, die positive Halbwellen mit einer Frequenz von z.B. 100 Hz aufweist. Die gleichgerichtete Netzwechselspannung wird dann der getakteten PFC-Schaltung 2 zugeführt.

Die PFC-Schaltung 2 weist vorzugsweise eingangsseitig einen Glättungskondensator C1 auf. Die Eingangsspannung Vin wird von dem Glättungskondensator C1 gesiebt und einer Induktivität L1 zugeführt. Der Glättungskondensator C1 ist dabei so dimensioniert, dass er nur hochfrequente Störungen glättet und somit als Filterkondensator wirkt. Eine niederfrequente Glättung der Eingangsspannung erfolgt nicht. Die Induktivität ist in Serie mit einer Diode D1 bzw. mit der Anode der Diode D1 geschaltet. Die PFC-Schaltung 2 umfasst einen steuerbaren Schalter S1, z.B. in Form eines Transistors oder eines Feldeffekttransistors, der zwischen Masse einerseits und dem Verbindungspunkt zwischen der Induktivität L1 und der Diode D1 andererseits geschaltet ist. Zur Stabilisierung der von der PFC-Schaltung 2 erzeugten Zwischenkreisspannung Vbus ist der Diode D1 ein Elektrolyt-Speicherkondensator C2 nachgeschaltet. Der Elektrolyt-Speicherkondensator C2 dient zur niederfrequenten Glättung und Stabilisierung der Zwischenkreisspannung Vbus.

Durch wiederholtes Schließen und Öffnen des Schalters S1 wird die Induktivität L1 entsprechend ge- und entladen. Wenn der Schalter S1 leitend ist, wird die Induktivität L1 magnetisch geladen. Der Ladestrom fließt dann über den Schalter S1 nach Masse. Wenn der Schalter S1 ausgeschaltet ist, fließt ein Entladestrom über die Induktivität L1 und die Diode D1 an die Last und den Elektrolyt-Speicherkondensator C2. Die Bestimmung des Zeitpunkts zum Schließen des Schalters S1 kann mittels einer Überwachung an einem Messpunkt M2 erfolgen, wobei an diesem Messpunkt das Erreichen der Entmagnetisierung der Induktivität L1 mit Hilfe der magnetisch gekoppelten Sekundärwicklung L5 erfasst werden kann. Das Öffnen des Schalters S1 kann beispielsweise nach dem Erreichen einer vorgegebenen Einschaltzeitdauer oder nach dem Erreichen eines vorgegebenen Stromes durch den Schalter S1 erfolgen. Dies ist aber nur ein Beispiel für die Regelung der PFC-Schaltung 2. Die PFC-Schaltung 2 kann alternativ zu diesem Beispiel des sog. Borderline Modes (Grenzbetriebs-Modus) auch im lückenden Strombetrieb oder im nichtlückenden Strombetrieb betrieben werden.

Diese Zwischenkreisspannung Vbus der PFC-Schaltung 2 ist vorzugsweise eine DC-Spannung bzw. eine näherungsweise konstante Spannung aufweisend eine Restwelligkeit oder Ripple, die wiederum einem Lastkreis 5 zugeführt ist, der insbesondere die Treiberschaltung 3 bzw. einen Konverter sowie die zu versorgende LED bzw. LEDs 4 aufweist. Die Treiberschaltung 3 erzeugt eine Versorgungsspannung Vout zur Versorgung der LED 4. Die Treiberschaltung 3 kann dabei auch einen konstanten Ausgangsstrom zur Speisung der LED 4 erzeugen.

Die Treiberschaltung 3 umfasst zwei in Form einer Halbbrücke geschaltete Schalter S2, S3. Der Schalter S2 ist mit der Zwischenkreisspannung Vbus der PFC-Schaltung 2 verbunden, während der Schalter S3 mit Masse verbunden ist. Die Schalter der Halbbrücke werden in bekannter Weise alternierend ein- und ausgeschaltet, um eine gewünschte Leistung d.h. einen gewünschten Strom und/oder eine gewünschte Spannung für die LED zu erzeugen. Insbesondere kann die LED abhängig von der Steuerung der Schalter S2, S3 gedimmt werden. Der Verbindungspunkt der zwei Schalter S2, S3 ist mit einer Serienschaltung aus einem Kondensator C3 und einer Primärseite W1 eines Transformators, der eine Sicherheitskleinspannungs-Isolationsbarriere SELV bildet, verbunden. Die Sekundärseite des Transformators beispielsweise aufweisend zwei Wicklungen W21, W22 ist jeweils über eine Diode D2, D3 an der LED 4 angeschlossen. Parallel zur LED 4 kann ein Kondensator C4 geschaltet sein.

Fig. 2 zeigt ein zweites Ausführungsbeispiel eines Betriebsgeräts 20 gemäß der vorliegenden Erfindung. Das Betriebsgerät 20 entspricht grundsätzlich dem in Fig. 1 gezeigten Betriebsgerät 1, wobei lediglich die Treiberschaltung für das bzw. die Leuchtmittel anders ausgestaltet ist.

Die Treiberschaltung 21 des zweiten Ausführungsbeispiels weist einen Schalter S20 auf, und ist als Buck-Konverter (Tiefsetzsteller) ausgeführt. Bei geschlossenem Schalter S20 fließt der Strom durch die LED 4 bzw. LEDs und eine Induktivität bzw. Spule L20 und steigt im Wesentlichen linear mit der Magnetisierung der Induktivität L20 an. Bei ausgeschaltetem Schalter S20 baut sich die Energie der Induktivität L20 durch einen Stromfluss wiederum durch die LED 4 und einer Freilaufdiode D20 im Wesentlichen linear ab, bis der Schalter S20 schließlich wieder eingeschaltet wird.

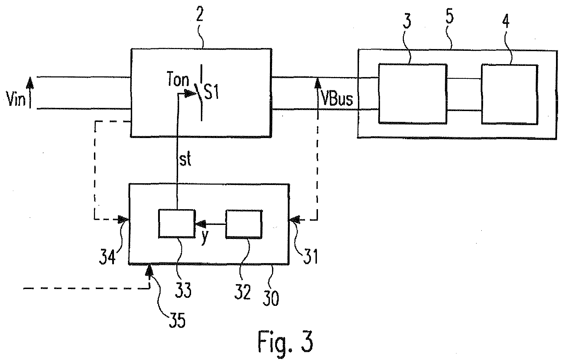

Fig. 3 zeigt einen erfindungsgemäßen PFC-Regler 30 zum Ein- und Ausschalten des Schalters S1 der PFC-Schaltung 2. Der PFC-Regler 30 ist vorzugsweise als digitaler Regler ausgestaltet.

Grundsätzlich wird zur aktiven Leistungsfaktorkorrektur der Schalter S1 der PFC-Schaltung vom PFC-Regler 30 derart gesteuert, dass ein Strom mit sinusförmiger Einhüllender durch die Induktivität L1 erzeugt wird, wobei sich die Einhüllende in Phase zur Eingangsspannung Vin befindet. Der Schalter S1 wird vorzugsweise mit einer wesentlich höheren Frequenz, z.B. mindestens 1 kHz bzw. mindestens 10 kHz, getaktet als die Frequenz der als gleichgerichtete Netzspannung ausgestalteten Eingangsspannung Vin, die typischerweise 100 Hz beträgt. Auf diese Weise kann sich in Kombination mit dem Eingangsfilter, beispielsweise einem Filterkondensator C1, eine sinusförmige Stromaufnahme aus dem Netz ergeben.

Zur Bestimmung der Einschaltzeitdauer Ton bzw. der Ausschaltzeitdauer des Schalters S1 benötigt der PFC-Regler 30 nunmehr Informationen vorzugsweise über die Zwischenkreisspannung Vbus bzw. über den Nulldurchgang des Stroms durch die Induktivität L1.

Die Zwischenkreisspannung Vbus kann, wie in Fig. 1 gezeigt, z.B. über einen am Ausgang der PFC-Schaltung 2 angeordneten Spannungsteiler R1, R2 ermittelt werden. Der entsprechende Messpunkt M2 befindet sich zwischen den zwei Widerständen R1, R2 des Spannungsteilers. Ein Nulldurchgang des Stroms durch die Induktivität L1 kann z.B., wie in Fig. 1 gezeigt, über eine mit der Induktivität L1 gekoppelte Sekundärwicklung L5 ermittelt bzw. festgestellt werden. Diese Sekundärwicklung L5 ist einerseits mit Masse und andererseits über einen Widerstand R5 mit einem entsprechenden Messpunkt M1 verbunden. Es gibt bekanntlich alternative Ausführungen zur Messung dieser Parameter z.B. über einen parallel zum Schalter S1 vorgesehenen Spannungsteiler.

Über eine vorzugsweise mit dem Messpunkt M2 verbundene Eingangsleitung 31 des PFC-Reglers 30 wird zunächst der aktuelle Wert der Zwischenkreisspannung Vbus erfasst. Der Wert der Zwischenkreisspannung Vbus wird vorzugsweise in digitaler Form einer Recheneinheit 32 weitergeleitet. Diese Recheneinheit 32 dient dazu, in jedem Taktzyklus des PFC-Reglers 30 einen Steuerwert y zu berechnen, der an einen Steuerblock 33 übermittelt wird. Der Steuerblock 33 setzt den Steuerwert y in ein Steuersignal st zum Betreiben des Schalters S1 um und steuert damit dessen Taktung.

Das Durchschalten des Schalters S1 erfolgt dabei vorzugsweise zu einem Zeitpunkt, zu dem möglichst kein Strom durch die Diode D1 fließt, da hierdurch die Schaltverluste verringert werden. Hierzu dient die in Fig. 1 gezeigte Sekundärwicklung L5 und die mit dem Messpunkt M1 verbundene Eingangsleitung 34. Der Zeitpunkt eines Nulldurchgangs des Stroms durch die Induktivität L1 wird von dem Steuerblock 33 erfasst und der Schalter S1 wird daraufhin vorzugsweise wieder eingeschaltet.

Der von der Recheneinheit 32 übermittelte Steuerwert y gibt dem Steuerblock 33 dabei vor, wie lange der Schalter S1 leitend geschaltet wird. Durch diese Zeitdauer wird die Leistungsaufnahme des Vorschaltgeräts und damit die Höhe der bereitgestellten Zwischenkreisspannung V_{bus} bestimmt. Es besteht allerdings auch die Möglichkeit, anstelle der Einschaltzeit des Schalters S1, dessen Tastverhältnis oder dessen Einschaltfrequenz in Abhängigkeit von dem aktuellen Steuerwert y zu verändern.

Der PFC-Regler 30 weist vorzugsweise eine weitere Eingangsleitung 35 auf, über welche ein Sollwert für die Zwischenkreisspannung V_{bus_soll} der Recheneinheit 32 zuführbar ist. Der PFC-Regler 30 verwendet dann die Taktung des Schalters S1, insbesondere die Einschaltzeit des Schalters S1 oder dessen Tastverhältnis oder dessen Einschaltfrequenz, als Steuergröße zur Regelung der Zwischenkreisspannung V_{bus} auf die Sollwertvorgabe V_{bus_soll}.

Es ist indessen bekannt, z.B. mittels Rückführsignalen aus dem Bereich der PFC-Schaltung oder des Lastkreises 5 oder über ein anliegendes externes Signal eine Veränderung der Leistungsaufnahme des Lastkreises zu erkennen, und daraufhin die Regelschleife und z.B. die Zeitkonstanten der Regelung zu verändern. Bei erkannter niedriger Leistungsaufnahme kann z.B. die Regelschleife verlangsamt werden.

Wenn nunmehr eine Veränderung der Reglergeschwindigkeit von einer hohen Reglergeschwindigkeit mit z.B. kleiner Zeitkonstanten auf eine langsame Regelungsgeschwindigkeit zustandsabhängig erfolgt, und dieser Übergang eingeleitet wird in einem Bereich, in dem sich die PFC-Schaltung 2 gerade in einem Extrembereich der Einschaltzeitdauer-Zeitmodulation (maximaler Ausschlag) befindet, wird es relativ lange dauern, bis der PFC-Regler mit der nunmehr eingestellten langsamen Reglergeschwindigkeit wieder einen stationären Zustand erreichen wird.

In diesem Übergangszeitraum wird es zu einer zu hohen Energieübertragung durch die PFC-Schaltung 2 kommen, was sich letztendlich in einem zu hohen LED-Strom niederschlagen kann. Wenn nunmehr dieser Übergangszeitraum zwischen der Umstellung der Zeitkonstanten bis zum stationären Ausregeln mit der niedrigeren Reglergeschwindigkeit in einem zeitlichen Bereich von z.B. 40 ms liegt, der durch das menschliche Auge auflösbar ist, wird die Umstellung von einer schnelleren auf eine langsamere Reglergeschwindigkeit optisch als ein Lichtblitz wahrgenommen.

Wenn die Umstellung von einer schnelleren auf eine niedrigere Regelgeschwindigkeit in einem Bereich ausgelöst wird, in dem sich die Einschaltzeitdauer-Zeitmodulation gerade in dem Bereich der geringsten Einschaltzeitdauer befindet, wird es zu einem Unterschreiten bzw. zu einem sogenannten Undershoot kommen, d.h. in einem Bereich von beispielsweise 40 ms wird eine zu geringe Leistung durch die PFC-Schaltung 2 übertragen, was optisch dann durch eine niedrigere Intensität der LED-Strecke oder sogar durch ein Verlöschen der LED-Strecke wahrgenommen wird.

Die Parameter der Regelschleife können auch von anderen Parametern als die Leistungsaufnahme, wie z.B. von der Betriebsphase des Leuchtmittels, abhängen. Während der Vorheiz- und der Zündphase einer Gasentladungslampe verwendet die Recheneinheit 32 vorzugsweise Parametersätze, welche zur Folge haben, dass der PFC-Regler 2 sehr schnell auf sich verändernde Situationen reagiert, um sicherzustellen, dass in jedem Fall die benötigte Leistung bereitgestellt werden kann. Während eines Normalbetriebs der Gasentladungslampe, d.h. nach deren Zündung, wird hingegen eine langsamere Reglergeschwindigkeit verwendet, so dass nur Oberwellen unterhalb eines vorgegebenen Pegels in das Netz zurückgestrahlt werden.

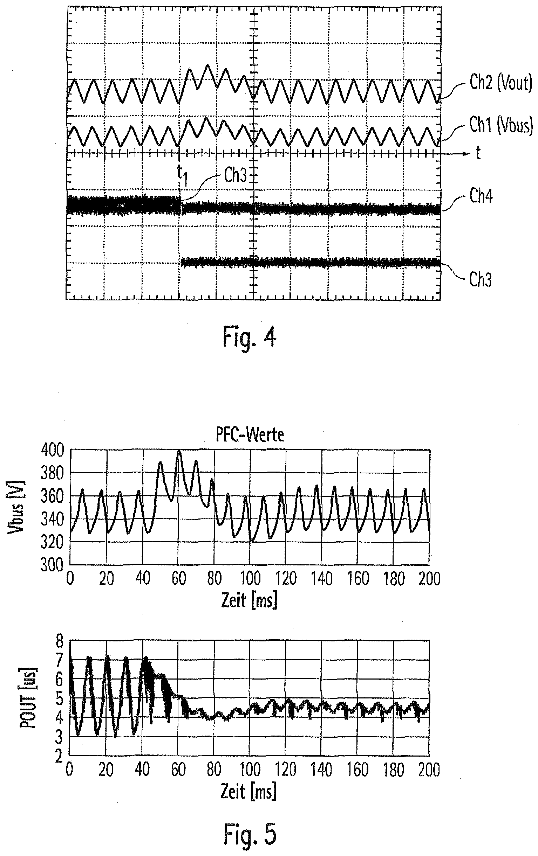

Fig. 4 zeigt den Verlauf der Zwischenkreisspannung Vbus bei einer Veränderung der Regelparameter zu einem willkürlichen Zeitpunkt. Der zeitliche Verlauf der Zwischenkreisspannung Vbus ist durch das Bezugszeichen Ch1 gekennzeichnet. Bei einer konstanten Einstellung der Reglerparameter bzw. der Reglergeschwindigkeit ist die Zwischenkreisspannung Vbus eine der Sollwertvorgabe V_{bus_soll} entsprechende konstante Spannung von z.B. 400 V mit einem Ripple bzw. mit einer Restwelligkeit mit einer Frequenz von 100 Hz. Die Versorgungsspannung Vout ist durch das Bezugszeichen Ch2 dargestellt und beträgt entsprechend einen konstanten Wert von z.B. 5 V mit Ripple. Der Versorgungsstrom bzw. der dem Leuchtmittel zugeführte Strom bleibt dagegen auch in einem Übergangszeitraum nach einer Änderung der Reglerparameter konstant, z.B. bei 1 A, s. Bezugszeichen Ch4.

Nun wird zum Zeitpunkt t1 die Reglergeschwindigkeit reduziert. Diese Reduzierung ist in Fig. 4 durch das Sinken der Kurve Ch3 zum Zeitpunkt t1 wiedergegeben.

Der Zeitpunkt t1 ist gemäß dem Stand der Technik willkürlich ausgewählt, so dass es ausweislich Fig. 4 wie oben beschrieben zu einer unerwünschten kurzfristigen Erhöhung der Zwischenkreisspannung Vbus und zu einem Lichtblitz kommen kann.

Fig. 5 zeigt ebenfalls dieses Phänomen. Bei ungefähr t = 40 ms wird die Reglergeschwindigkeit reduziert und die Zwischenkreisspannung Vbus erhöht sich während 40 ms um beinahe 40 V. Die Auswirkung dieser Änderung ist von einem menschlichen Auge durchaus wahrnehmbar.

Erfindungsgemäß wird daher vorgesehen, dass insbesondere der Übergang von hoher Reglergeschwindigkeit auf niedrige Reglergeschwindigkeit nur dann zulässig ist, wenn sich die Einschaltzeitdauer-Zeitmodulation d.h. die Ton-Zeitmodulation des PFC-Reglers in einem vordefinierten Korridor um den zeitlichen Mittelwert der Einschaltzeitdauer herum befindet. Dies stellt eine erste Ausführungsform der Erfindung dar.

Die beste Lösung gemäß der ersten Ausführungsform besteht darin, die Regelparameter erst zu dem Zeitpunkt zu ändern, zu dem die Ist-Einschaltzeitdauer dem Einschaltzeitdauer-Mittelwert entspricht. Die Ist-Einschaltzeitdauer ist hier vorzugsweise die aktuelle Einschaltzeitdauer des Schalter S1 der PFC-Schaltung 2.

Alternativ kann eine Änderung der Regelparameter bzw. der Regelgeschwindigkeit erst vorgenommen werden, wenn die Einschaltzeitdauer innerhalb eines vorgegebenen Fensters um den Mittelwert liegt. Vorzugsweise beträgt das Fenster +-1%, +-2%, +-5% oder +-10% des Mittelwerts.

Indessen kann sich der Mittelwert der Einschaltzeitdauer zeitlich variieren, so dass für diese Ausführungsform es ggf. notwendig ist, einen gleitenden Mittelwert (moving average) durch Mittelung zurückliegender Einschaltzeitdauer-Zeitzyklen zu verwenden. Für eine gute Durchschnittswertbildung müssten beispielsweise mehr als 10 Netzperioden für die Mittelwertbildung verwendet werden.

Z.B. kann ein einfacher gleitender Durchschnitt, bei dem die letzten x Werte der Einschaltzeitdauer gleich gewichtet werden, oder ein gewichteter gleitender Mittelwert verwendet werden, bei dem älteren Einschaltzeitdauer-Werten eine z.B. linear absteigende Gewichtung zugeordnet werden.

Beispielsweise kann bei einer schnellen Reglergeschwindigkeit die Einschaltzeitdauer in einem vorgegebenen Zeitbereich durch den PFC-Regler 30 variiert werden. Hingegen kann bei einer langsameren Reglergeschwindigkeit die Einschaltzeitdauer nur noch in einem engeren Zeitbereich als dem für die schnellen Reglereigenschaften variiert werden. Die langsamere Geschwindigkeit, die z.B. durch entsprechende Verstellung der Zeitkonstanten der Regelung herbeigeführt wird, verhindert stationäre Regelabweichungen, braucht aber durch den engeren Zeitbereich mehr Zeit, um auf den mittleren Wert der Einschaltzeitdauer zu regeln.

Alternativ kann dann eine Änderung von einer schnelleren zu einer langsameren Regelgeschwindigkeit erst vorgenommen werden, wenn die Einschaltzeitdauer innerhalb des für die langsamere Regelgeschwindigkeit vorgesehenen, engeren Einschaltzeitdauer-Bereichs liegt.

Gemäß einem anderen Ausführungsbeispiel, das gegenüber dem ersten Beispiel bevorzugt ist, wird der Zeitpunkt für die Änderung der Reglerparameter, insbesondere der Reglergeschwindigkeit, insbesondere der Reglergeschwindigkeit von schnell auf langsam wie folgt bestimmt.

Als geeigneter Zeitpunkt wird der Zeitpunkt genommen, zu dem die mit einem beispielsweise 100 Hz Rippel versehenen Zwischenkreisspannung Vbus die Sollwertvorgabe V_{bus_soll} von beispielsweise 400 Volt DC kreuzt. Dies entspricht dem Zustand des PFC-Reglers, in dem die Einschaltzeitdauer auch den Mittelwert einnimmt. Es hat indessen den Vorteil, dass unabhängig von der Last, keine Pegelverschiebung notwendig ist. Somit ist eine Ermittlung basierend auf dem im Zusammenhang mit dem vorigen Ausführungsbeispiel erwähnten gleitenden Mittelwert nicht notwendig.

Alternativ werden die Reglerparameter geändert, sobald die Zwischenkreisspannung Vbus sich in einem vordefinierten Bereich um die Sollwertvorgabe V_{bus_soll} befindet, beispielsweise in einem Bereich von +-1, 2, 5 oder 10 V oder z.B. in einem bestimmten Prozentbereich um die Sollwertvorgabe V_{bus_soll}.

Die Regelparameter werden gemäß diesem Ausführungsbeispiel dann geändert, wenn die gemessene Zwischenkreisspannung Vbus der Sollwertvorgabe Vbus_soll entspricht.

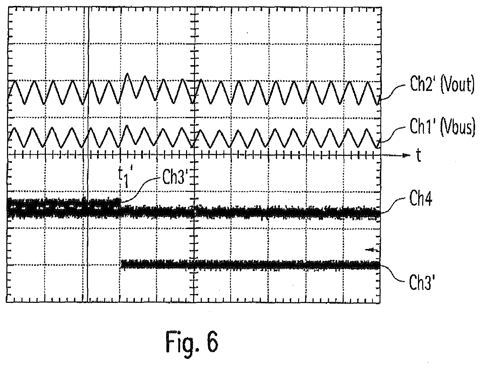

Fig. 6 zeigt wie erfindungsgemäß die Zeitdauer des Übergangs zwischen schnelleren und langsameren Reglereinstellungen reduziert wird.

Der Zeitpunkt t1' der Reduzierung der Reglergeschwindigkeit wird erfindungsgemäß ausgewählt. Die Reduzierung wird z.B. nicht sofort durchgeführt, wenn Lastsprünge erwartet werden. Sondern es wird vorzugsweise abgewartet, bis die Einschaltzeitdauer sich in einem bestimmten Korridor um den Einschaltzeitdauer-Mittelwert befindet oder bis die Zwischenkreisspannung Vbus die Sollwertvorgabe Vbus_soll kreuzt.

Erfindungsgemäß und ausweislich der Kurven Ch1' und Ch2' erreichen die Zwischenkreisspannung Vbus und die Versorgungsspannung Vout den stationären Zustand schneller als beim in Fig. 4 dargestellten Stand der Technik. Die Spannungserhöhung während dem Übergangszeitraum ist gegenüber dem Stand der Technik auch kleiner.

Im Folgenden wird eine Ausführungsform des PFC-Reglers 30 bzw. der Recheneinheit 32 erläutert:
Der aktuelle Ist-Wert der Zwischenkreisspannung Vbus wird dabei vorzugsweise durch den in Fig. 1 gezeigten Messpunkt M2 erfasst. Zur digitalen Weiterverarbeitung wird dieser analoge Wert der Zwischenkreisspannung Vbus durch einen Analog-zu-Digital-Umsetzer ADC in einen Digitalwert umgesetzt. Die Umsetzung erfolgt vorzugsweise in jedem Taktzyklus des PFC-Reglers 30.

Der digitale Wert der Zwischenkreisspannung Vbus wird mit dem vorzugsweise über die Eingangsleitung 35 zugeführten Sollwert für die Zwischenkreisspannung Vbus_soll verglichen. Sobald der gemessene digitalisierte Wert den Sollwert erreich, wird dies von einer entsprechenden Erkennungs-Einheit erkannt.

Ein Multiplexer MUX weist einen Ausgang für die Ausgabe von Reglereigenschaften RE der PFC-Schaltung 2 auf. Diese Reglereigenschaften RE sind beispielsweise die Parameter eines P-Reglers, PI-Reglers oder PID-reglers, die dessen zeitliches Antwortverhalten beeinflussen. Weiterhin weist der Multiplexer MUX einen ersten Eingang für einen ersten Reglerparametersatz RE_slow und einen zweiten Eingang für einen zweiten Reglerparametersatz RE_fast. Der zweite Reglerparametersatz RE_fast verursacht ein schnelleres zeitliches Antwortverhalten der PFC-Schaltung als der erste Reglerparametersatz RE_ slow.

Die in Fig. 3 gezeigte Recheneinheit 32 berechnet insbesondere den Steuerwert y abhängig vom Ausgang des Multiplexers MUX.

Über einen weiteren Signalisierungs-Eingang kann dem Multiplexer MUX signalisiert werden, dass z.B. wegen eines Lastsprungs eine Reduzierung der Reglergeschwindigkeit durchgeführt werden soll.

Wird nun von der Erkennungs-Einheit das Erreichen des Sollwerts Vbus_soll erkannt, so kann der Multiplexer MUX an seinem Ausgang die langsamere Reglerparameter RE_slow ausgeben. Dies soll vorzugsweise nur erfolgen, wenn am Signalisierungs-Eingang auch ein entsprechender Befehl zur Reduzierung der Reglergeschwindigkeit vorhanden ist. Dieser Befehl kann ein externes Signal sein, oder kann von dem PFC-Regler selbst z.B. auf Basis von Rückführsignalen ausgehend von der PFC-Schaltung 2 und/oder vom Lastkreis 5 erzeugt werden.

Beispiele für Ereignisse, die einen derartigen Befehl bzw. eine Veränderung der Reglereigenschaften auslösen können, sind insbesondere Lastsprünge, d.h. bei einem fertig installierten LED-Modul insbesondere Dimmwertsprünge, so dass bevorzugt im Bereich des Dimmsprungs der PFC-Regler schneller reagiert als bei stationärem Dimmwertbetrieb.

Mit anderen Worten wird die gemessene Zwischenkreisspannung Vbus mit der Sollwertvorgabe verglichen, um den Zeitpunkt bzw. den zeitlichen Bereich zu erfassen, in welchem die Zwischenkreisspannung der Sollwertvorgabe entspricht. Nur in diesem Zeitpunkt oder in diesem Zeitfenster wird die Veränderung der Reglereigenschaften freigegeben.

Gemäß einer Ausführungsform der Erfindung ist der PFC-Regler 30 als Mikrocontroller ausgestaltet, dem vorzugsweise die Dimmwertvorgabe zugeführt wird. Dieser kann somit in einem Zeitraum kurz vor der Ausführung des Dimmsprunges an die LED-Strecke die Veränderung der zeitlichen Eigenschaften des PFC-Reglers veranlassen.

Erfindungsgemäß kann der Zeitpunkt der Änderung der Reglereigenschaften also optimiert werden. Nach einem Befehl zur Änderung der Reglereigenschaften bzw. zur Reduzierung der Reglergeschwindigkeit muss erfindungsgemäß maximal 5 ms gewartet werden, bis die Änderung auch durchgeführt werden kann. Diese Zeitdauer entspricht einer halben Periode der Restwelligkeit (Ripple) der Zwischenkreisspannung Vbus.

Die PFC-Schaltung 2 kann auch alternativ mit einer DC-Spannung d.h. einer konstanten Spannung versorgt werden. Alternativ kann auch die erfindungsgemäße Optimierung des Zeitpunkts der Änderung der Reglereigenschaften mit einer THD (Total Harmonic Distortion)-Korrektur der Leistungsfaktorkorrektur kombiniert werden.

Vorzugsweise sind der Vergleich Zwischenkreisspannung/Sollwertvorgabe sowie auch die Verstellung der Regelparameter wie auch der PFC-Regelalgorithmus selbst digital implementiert.

Die Erfindung lässt sich anwenden auf Gasentladungslampen, insbesondere aber auf LED-Strecken. Im LED-Bereich ergibt sich indessen ein weiteres Beispiel für einen Lastsprung, d.h. für eine Änderung der Reglerparameter, bei selektivem Zu-/Abschalten von LEDs in der LED-Strecke.

Ein Ausführungsbeispiel besteht darin, dass unterschiedliche monochromatische LEDs verwendet werden wie z.B. rote, grüne, blaue LEDS. Auch können z.B. rote LEDs mit farbstoffkonvertierten blauen LEDs kombiniert werden. Vorzugsweise ergeben die monochromatischen LEDs ein Mischlicht in Form eines Weißlichts. Ein Ereignis für eine Änderung der Reglerparameter bzw. für einen Lastsprung kann dann z.B. das selektive Zu-/Abschalten von monochromatischen LEDs, insbesondere von roten LEDs, zur Änderung der Farbe des Mischlichts oder zur Farbtemperaturänderung von Weißlicht-LED-Modulen.

## Patentansprüche

1. Verfahren zum Betrieb einer aktiv getakteten PFC-Schaltung (2) mit direkt oder indirekt angeschlossenem Lastkreis (5) am Ausgang der PFC-Schaltung (2),
wobei der Lastkreis (5) mindestens ein Leuchtmittel, insbesondere eine oder mehrere LEDs (4) aufweist, wobei die PFC-Schaltung (2) von einem PFC-Regler (30) derart angesteuert wird, dass der PFC-Regler (30) auf Basis von mindestens einer ersten (RE_fast) und einer zweiten (RE_slow) Reglereinstellung einen Steuerparameter, insbesondere eine Einschaltzeitdauer (ton), für die Taktung der PFC-Schaltung (2) ermittelt,
**dadurch gekennzeichnet dass**,
der Zeitpunkt einer Änderung von der ersten (RE_fast) auf die zweite (RE_slow) Reglereinstellung abhängig von dem direkt oder indirekt ermittelten Mittelwert des Steuerparameters, insbesondere der Einschaltzeitdauer (ton), ist.

2. Verfahren gemäß Anspruch 1,
wobei der Zeitpunkt der Änderung der Reglereinstellung über einen Vergleich der Einschaltzeitdauer (ton) mit dem zeitlichen Mittelwert der Einschaltzeitdauer (ton) ermittelt wird.

3. Verfahren gemäß Anspruch 2,
wobei die Änderung der Reglereinstellung dann vorgenommen wird, wenn erfasst wird, dass die für die Taktung der PFC-Schaltung (2) ermittelte Einschaltzeitdauer (ton) und der zeitlichen Mittelwert der Einschaltzeitdauer (ton) gleich sind.

4. Verfahren nach einem der vorigen Ansprüche,
wobei der PFC-Regler (30) die Einschaltzeitdauer für die Taktung der PFC-Schaltung (2) ermittelt, und
die Reglereinstellung erst geändert wird, wenn die Einschaltzeitdauer in einem vordefinierten Korridor um den zeitlichen Mittelwert der Einschaltzeitdauer sich befindet.

5. Verfahren nach einem der Ansprüche 2 bis 4,
wobei zur Bildung des zeitlichen Mittelwerts der Einschaltzeitdauer (ton) eine vordefinierte Anzahl an Perioden der von der PFC-Schaltung (2) erzeugten Zwischenkreisspannung (Vbus) berücksichtigt wird.

6. Verfahren gemäß Anspruch 1,
wobei der Zeitpunkt der Änderung der Reglereinstellung über einen Vergleich der von der PFC-Schaltung (2) erzeugten Zwischenkreisspannung (Vbus) mit einer Sollwertvorgabe für die Zwischenkreisspannung (Vbus_soll) ermittelt wird.

7. Verfahren gemäß Anspruch 6,
wobei die Reglereinstellung erst geändert wird, wenn die von der PFC-Schaltung (2) erzeugte Zwischenkreisspannung (Vbus) die Sollwertvorgabe für die Zwischenkreisspannung (Vbus_soll) kreuzt.

8. Verfahren gemäß Anspruch 6 oder 7,
wobei die Reglereinstellung erst geändert wird, wenn die von der PFC-Schaltung (2) erzeugte Zwischenkreisspannung (Vbus) in einem vordefinierten Bereich um den Sollwert (Vbus_soll) für die Zwischenkreisspannung liegt.

9. Verfahren nach einem der vorigen Ansprüche,
wobei die Änderung der Reglereinstellung einer Verstellung der Reglergeschwindigkeit, insbesondere der Zeitkonstanten des PFC-Reglers (30), entspricht.

10. Verfahren nach einem der vorigen Ansprüche,
wobei die erste (RE_fast) Reglereinstellung gegenüber der zweiten (RE_slow) Reglereinstellung eine schnellere Reglergeschwindigkeit darstellt.

11. Verfahren nach einem der vorigen Ansprüche,
wobei die PFC-Schaltung (2) mit einer vorzugsweise gleichgerichteten Wechselspannung versorgt wird.

12. Verfahren nach einem der vorigen Ansprüche,
wobei die Änderung der Reglereinstellung von einer Änderung der Last oder von einer Änderung der Betriebsphase des Leuchtmittels verursacht wird.

13. Verfahren gemäß Anspruch 12,
wobei die Änderung der Last ausgehend von Parametern des Lastkreises (5) ermittelt wird.

14. Verfahren gemäß Anspruch 12 oder 13,
wobei eine Änderung der Last in Form eines Dimmens des Leuchtmittels oder in Form einer Veränderung der Anzahl der Leuchtmittel ermittelt wird.

15. Integrierte Schaltung, insbesondere ASIC oder Microcontroller oder eine Hybridversion davon, die zur Implementierung eines Verfahrens gemäß einem der vorigen Ansprüche bzw. zur Änderung der Reglereinstellung eines PFC-Reglers gemäß einem der vorigen Ansprüche ausgebildet ist.

16. PFC-Regler (30) zum Betrieb einer aktiv getakteten PFC-Schaltung (2) mit direkt oder indirekt angeschlossenem Lastkreis (5) am Ausgang der PFC-Schaltung (2),
wobei der Lastkreis (5) mindestens ein Leuchtmittel, insbesondere eine oder mehrere LEDs (4) aufweist,
wobei der PFC-Regler (30) dazu ausgebildet ist, um die PFC-Schaltung (2) derart anzusteuern, dass der PFC-Regler (30) auf Basis von mindestens einer ersten (RE_fast) und einer zweiten (RE_slow) Reglereinstellung einen Steuerparameter, insbesondere eine Einschaltzeitdauer (ton), für die Taktung der PFC-Schaltung (2) ermittelt,
**dadurch gekennzeichnet dass**,
der Zeitpunkt einer Änderung von der ersten (RE_fast) auf die zweite (RE_slow) Reglereinstellung abhängig von dem direkt oder indirekt ermittelten Mittelwert des Steuerparameters, insbesondere der Einschaltzeitdauer (ton), ist.

17. Schaltung aufweisend
- eine aktiv getaktete PFC-Schaltung (2) und
- einen PFC-Regler (30) gemäß Anspruch 16.

18. Beleuchtungsmodul aufweisend
- eine Schaltung gemäß Anspruch 17, und
- einen am Ausgang der PFC-Schaltung (2) direkt oder indirekt angeschlossenen Lastkreis (5), wobei im Lastkreis (5) mindestens ein Leuchtmittel, insbesondere eine oder mehrere LEDs (4) anschließbar ist.

## Claims

1. A method for operating an actively clocked PFC circuit (2) having a directly or indirectly connected load circuit (5) at the output of the PFC circuit (2), wherein the load circuit (5) has at least one luminous means, in particular one or more LEDs (4), wherein the PFC circuit (2) is controlled by a PFC controller (30) in such a manner that the PFC controller (30) determines a control parameter, in particular a switched-on time period (ton), for the clocking of the PFC circuit (2) on the basis of at least one first controller setting (RE_fast) and one second controller setting (RE_slow), **characterized in that**
the time of a change from the first controller setting (RE_fast) to the second controller setting (RE_slow) is dependent on the directly or indirectly determined average value of the control parameter, in particular, the switched-on time period (ton).

2. A method according to Claim 1,
wherein the time of the change of the controller setting is determined by means of a comparison of the switched-on time period (ton) with the time average value of the switched-on time period (ton).

3. A method according to Claim 2,
wherein the change of the controller setting is made when it is detected that the switched-on time period (ton) determined for the clocking of the PFC circuit (2) and the time average value of the switched-on timer period (ton) are the same.

4. A method according to any one of the preceding claims,
wherein the PFC controller (30) determines the switched-on time period for the clocking of the PFC circuit (2), and the controller setting is only changed when the switched-on time period is in a pre-defined corridor around the time average value of the switched-on time period.

5. A method according to any one of Claims 2 to 4,
wherein a predefined number of periods of the intermediate circuit voltage (Vbus) generated by the PFC circuit (2) is taken into consideration for the formation of the time average value of the switched-on time period (ton).

6. A method according to Claim 1,
wherein the time of the change of the controller setting is determined by means of a comparison of the intermediate circuit voltage (Vbus) generated by the PFC circuit (2) with a setpoint setting for the intermediate circuit voltage (Vbus-setpoint).

7. A method according to Claim 6
wherein the controller setting is changed only when the intermediate circuit voltage (Vbus) generated by the PFC circuit (2) crosses the setpoint setting for the intermediate circuit voltage (Vbus_setpoint).

8. A method according to Claim 6 or 7,
wherein the controller setting is changed only when the intermediate circuit voltage (Vbus) generated by the PFC circuit (2) is in a predefined range around the setpoint value (Vbus_setpoint) for the intermediate circuit voltage.

9. A method according to any of the preceding claims,
wherein the change of the controller setting corresponds to an adjustment of the control speed, in particular of the time constants of the PFC controller (30).

10. A method according to any one of the preceding claims,
wherein the first (RE_fast) controller setting compared to the second (RE_slow) controller setting constitutes a faster control speed.

11. A method according to any one of the preceding claims,
wherein the PFC circuit (2) is supplied with a preferably rectified alternating voltage.

12. A method according to any one of the preceding claims,
wherein the change of the controller setting is caused by a change of the load or by a change of the operating phase of the luminous means.

13. A method according to Claim 12,
wherein the change of the load is determined based on parameters of the load circuit (5).

14. A method according to Claim 12 or 13,
wherein a change of the load is determined in the form of a dimming of the luminous means or in the form of a change of the number of the luminous means.

15. An integrated circuit, in particular an ASIC or microcontroller or a hybrid version thereof, which is designed for implementing a method according to any one of the preceding claims or for changing the controller setting of a PFC controller according to any one of the preceding claims.

16. A PFC controller (30) for operating an actively clocked PFC circuit (2) having a directly or indirectly connected load circuit (5) at the output of the PFC circuit (2), wherein the load circuit (5) has at least one luminous means, in particular one or more LEDs (4), wherein the PFC controller (30) is designed in order to control the PFC circuit (2) in such a manner that the PFC controller (30) determines a control parameter, in particular a switched-on time period (ton), for the clocking of the PFC circuit (2) on the basis of at least one first controller setting (RE_fast) and one second controller setting (RE_slow), **characterized in that**
the time of a change from the first controller setting (RE_fast) to the second controller setting (RE_slow) is dependent on the directly or indirectly determined average value of the control parameter, in particular, the switched-on time period (ton).

17. A circuit having
- an actively clocked PFC circuit (2) and
- a PFC controller (30) according to Claim 16.

18. A lighting module having
- a circuit according to Claim 17, and
- a load circuit (5) connected directly or indirectly at the output of the PFC circuit (2),
wherein at least one luminous means, in particular one or more LEDs (4) can be connected in the load circuit (5).

## Revendications

1. Procédé pour l'exploitation d'un circuit PFC cadencé activement (2) avec un circuit de charge (5) connecté directement ou indirectement à la sortie du circuit PFC (2),
le circuit de charge (5) comprenant au moins un moyen d'éclairage, plus particulièrement une ou plusieurs LED (4),
le circuit PFC (2) étant contrôlé par un régulateur PFC (30) de façon à ce que le régulateur PFC (30) détermine, sur la base d'au moins un premier réglage du régulateur (RE_fast) et un deuxième réglage du régulateur (RE_slow), un paramètre de commande, plus particulièrement une durée de mise en marche (ton) pour le cadencement du circuit PFC (2),
**caractérisé en ce que**
le moment de la modification du premier réglage du régulateur (RE_fast) vers le deuxième réglage du régulateur (RE_slow) dépend de la valeur moyenne, déterminée directement ou indirectement, du paramètre de commande, plus particulièrement de la durée de mise en marche (ton).

2. Procédé selon la revendication 1,
le moment de la modification du réglage du régulateur est déterminé à l'aide d'une comparaison de la durée de mise en marche (ton) avec la deuxième valeur moyenne de la durée de mise en marche (ton).

3. Procédé selon la revendication 2,
la modification du réglage du régulateur est effectué lorsqu'il est détecté que la durée de mise en marche (ton) déterminée pour le cadencement du circuit PFC (2) et la deuxième valeur moyenne de la durée de mise en marche (ton) sont égales.

4. Procédé selon l'une des revendications précédentes,
le régulateur PFC (30) déterminant la durée de mise en marche pour le cadencement du circuit PFC (2) et
le réglage du régulateur n'étant changé que lorsque la durée de mise en marche se trouve dans un corridor prédéfini autour de la valeur moyenne temporelle de la durée de mise en marche.

5. Procédé selon l'une des revendications 2 à 4,
moyennant quoi, pour la formation de la valeur moyenne temporelle de la durée de mise en marche (ton), un nombre prédéfini de périodes de la tension de circuit intermédiaire (Vbus) générée par le circuit PFC (2) est pris en compte.

6. Procédé selon la revendication 1,
le moment de la modification du réglage du régulateur étant déterminé à l'aide d'une comparaison entre la tension de circuit intermédiaire (Vbus) générée par le circuit PFC (2) et une valeur de consigne pour la tension de circuit intermédiaire (Vbus_soll).

7. Procédé selon la revendication 6,
le réglage du régulateur n'étant changé que lorsque la tension de circuit intermédiaire (Vbus) générée par le circuit PFC (2) croise la valeur de consigne pour la tension de circuit intermédiaire (Vbus_soll).

8. Procédé selon la revendication 6 ou 7,
le réglage du régulateur n'étant changé que lorsque la tension de circuit intermédiaire (Vbus) générée par le circuit PFC (2) se trouve dans une plage prédéfinie autour de la valeur de consigne (Vbus_soll) pour la tension de circuit intermédiaire.

9. Procédé selon l'une des revendications précédentes,
la modification du réglage du régulateur correspond à un réglage de la vitesse du régulateur, plus particulièrement aux constantes de temps du régulateur PFC (30).

10. Procédé selon l'une des revendications précédentes,
le premier réglage du régulateur (RE_fast) représentant une vitesse plus rapide par rapport au deuxième réglage du régulateur (RE_slow).

11. Procédé selon l'une des revendications précédentes,
le circuit PFC (2) étant alimenté de préférence avec une tension alternative redressée.

12. Procédé selon l'une des revendications précédentes,
la modification du réglage du régulateur étant provoqué par une modification de charge ou par un changement de phase de fonctionnement du moyen d'éclairage.

13. Procédé selon la revendication 12,
la modification de charge étant déterminée à partir de paramètres du circuit de charge (5).

14. Procédé selon la revendication 12 ou 13,
une modification de charge étant déterminée sous la forme d'une gradation du moyen d'éclairage ou sous la forme d'une modification du nombre de moyens d'éclairage.

15. Circuit intégré, plus particulièrement ASIC ou microcontrôleur ou une version hybride de ceux-ci, qui est conçu pour l'implémentation d'un procédé selon, l'une des revendications précédentes ou pour la modification du réglage du régulateur d'un régulateur PFC selon l'une des revendications précédentes.

16. Régulateur pFC (30) pour l'exploitation d'un circuit PFC (2) cadencé activement avec un circuit de charge connecté directement ou indirectement à la sortie du circuit PFC (2),
le circuit de charge (5) comprenant au moins un moyen d'éclairage, plus particulièrement une ou plusieurs LED (4),
le régulateur PFC (30) étant conçu pour contrôler le circuit PFC (2) de façon à ce que le régulateur PFC (30) détermine, sur la base d'au moins un premier réglage du régulateur (RE_fast) et d'un deuxième réglage du régulateur (RE_slow), un paramètre de commande, plus particulièrement une durée de mise en marche (ton), pour le cadencement du circuit PFC (2),
**caractérisé en ce que**
le moment de la modification du premier réglage du régulateur (RE_fast) vers le deuxième réglage du régulateur (RE_slow) dépend de la valeur moyenne, déterminée directement ou indirectement, plus particulièrement de la durée de mise en marche (ton).

17. Circuit comprenant
- un circuit PFC cadencé activement (2) et
- un régulateur PFC (30) selon la revendication 16.

18. Module d'éclairage comprenant
- un circuit selon la revendication 17, et
- un circuit de charge (5) connecté directement ou indirectement à la sortie du circuit PFC (2), moyennant quoi, dans le circuit de charge (5), un moyen d'éclairage, plus particulièrement une ou plusieurs LED (4), peuvent être connectés.
